**Europäisches Patentamt**

**European Patent Office**

**Office européen des brevets**

(19)

(11) Numéro de publication : **0 414 878 B1**

(12) # FASCICULE DE BREVET EUROPEEN

(45) Date de publication du fascicule du brevet :
**02.12.92 Bulletin 92/49**

(51) Int. Cl.$^5$ : **B60J 5/04**

(21) Numéro de dépôt : **90904855.5**

(22) Date de dépôt : **28.02.90**

(86) Numéro de dépôt international :
**PCT/FR90/00140**

(87) Numéro de publication internationale :
**WO 90/09902 07.09.90 Gazette 90/21**

(54) **ELEMENT OUVRANT DE CARROSSERIE DE VEHICULES AUTOMOBILES.**

(30) Priorité : **03.03.89 FR 8902752**

(43) Date de publication de la demande :
**06.03.91 Bulletin 91/10**

(45) Mention de la délivrance du brevet :
**02.12.92 Bulletin 92/49**

(84) Etats contractants désignés :
**BE DE ES FR GB IT NL SE**

(56) Documents cités :
**EP-A- 204 996**
**FR-A- 2 416 809**
**FR-A- 2 542 270**
**US-A- 3 782 036**

(72) Inventeur : **DOSSIN, Jacques**
**4, rue de l'Alma**
**F-92400 Courbevoie (FR)**
Inventeur : **GOLDACH, Hubert**
**Grenvenhauser Weg 33**
**W-4030 Ratingen 8 (DE)**
Inventeur : **KOCH, Boris**
**Rosenweg 29**
**W-5632 Wermelskirchen 3 (DE)**

(74) Mandataire : **Fabien, Henri et al**
**PSA Peugeot Citroen Département OPS/BPI**
**18, rue des Fauvelles**
**F-92250 La Garenne-Colombes (FR)**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

## Description

L'invention a pour objet la réalisation d'un élément ouvrant composite, tel qu'une porte ou volet arrière de carrosserie de véhicules automobiles, constitué par une association d'éléments métalliques et d'éléments en matière plastique.

On connait par exemple par le brevet FR- 2 542 270, des éléments ouvrants comportant un panneau constitué par une pièce métallique telle qu'une plaque de tôle centrale sur laquelle est surmoulée une pièce périphérique en matière synthétique, tandis que peuvent être prévus, venant directement de l'opération de surmoulage de la pièce périphérique sur la plaque de tôle, des nervures'de rigidification, des éléments d'articulation de l'élément ouvrant, ou des points de fixation par exemple pour la serrure et les équilibreurs. Une telle conception présente l'inconvénient de ne pas assurer la présentation et la finition intérieures de l'élément ouvrant.

L'invention consiste dans la réalisation d'un élément ouvrant de carrosserie de véhicule automobile à partir d'une pièce métallique en forme d'anneau et d'une pièce plastique surmoulée formant un élément de structure interne de l'élément ouvrant, la pièce plastique assurant la présentation et la finition intérieures de l'élément ouvrant.

Une telle conception présente l'avantage d'obtenir un ensemble homogène en structure et d'une étanchéité parfaite.

L'invention concerne donc un élément ouvrant de carrosserie de véhicule automobile comportant un panneau constitué par un pièce métallique et une pièce plastique, présentant des nervure de rigidification et surmoulée sur la pièce métallique, caractérisée en ce que la pièce métallique et la pièce plastique constituent un élément de structure interne de l'élément ouvrant, un panneau extérieur étant rapporté sur cet élément de structure interne, en ce que la pièce métallique présente un forme d'anneau définissant un ouverture et de section en U à l'intérieur duquel sont surmoulées les nervures de rigidification, ces nervures étant retenues par des points d'ancrage prévus dans la pièce métallique, et en ce que la pièce plastique comporte un anneau fermant l'ouverture de la pièce métallique, à travers laquelle il est rendu visible du côté intérieur de l'élément ouvrant.

Selon un mode préféré de réalisation, la pièce métallique a la forme d'un trapèze rectangle présentant une branche interne reliant l'angle droit adjacent à la grande base au côté opposé.

Selon une autre caractéristique, une garniture intérieure en matière thermoplastique destinée à recouvrir les formes de la pièce métallique est soudée sur la pièce plastique.

D'autres caractéristiques et avantages de l'invention apparaîtront mieux dans la description détaillée qui suit et se réfère aux dessins annexés donnés uniquement à titre d'exemple, et dans lesquels:

- la Figure 1 est une vue en éclaté de l'élément de structure intérieure du panneau inférieur d'un élément ouvrant de carrosserie de véhicule automobile, tel qu'une porte;
- la Figure 2 est une vue en éclaté montrant le montage de la garniture intérieure de la porte sur l'élément de structure interne;
- la Figure 3 est une vue en éclaté montrant le montage du panneau extérieur de porte et du cadre de vitre sur l'ensemble structure interne-garniture intérieure.

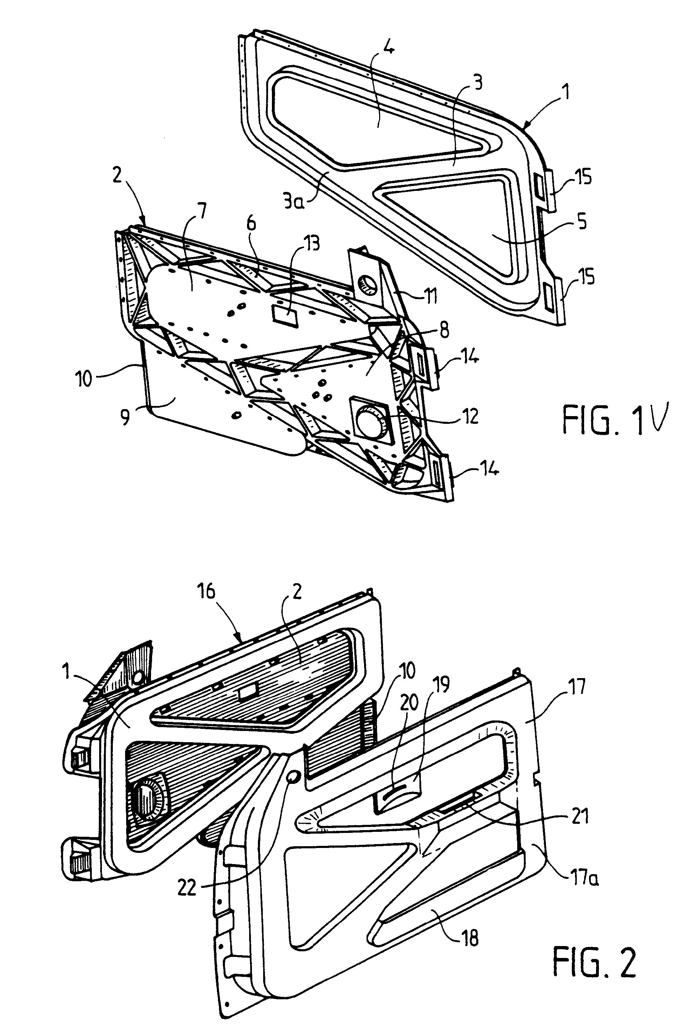

La figure 1 montre en éclaté l'élément de structure interne d'un élément ouvrant tel qu'une porte et constitué par une pièce métallique 1 en forme d'anneau et une pièce plastique en matière composite 2, par exemple en matière thermoplastique renforcée de fibres de verre. La pièce métallique 1 de section en U présente sensiblement la forme d'un trapèze rectangle avec une branche interne 3 reliant l'angle droit adjacent à la grande base au côté opposé 3a, définissant ainsi deux ouvertures 4 et 5. Une telle forme permet de prendre en compte les lignes d'effort entre les fixations de la porte sur la caisse (charnières et serrure) à savoir: compression longitudinale, intrusion latérale, rigidité en torsion à l'encadrement de vitre et rigidité verticale. Sur la pièce métallique est surmoulée la pièce en matière composite 2 qui présente d'une part des nervures de raidissement 6 retenues à l'intérieur de la pièce métallique 1 par des points d'ancrage et d'autre part des panneaux 7 et 8 destinés à fermer les ouvertures 4 et 5 de la pièce métallique. Elle présente de plus un panneau 9 disposé sous le côté oblique 3a de la pièce métallique 1, et comportant un rebord 10, destiné à former le fond d'un vide-poche.

Venant directement de moulage, il peut être prévu des éléments permettant d'intégrer certaines fonctions, éléments tels que:

- une structure 11 support de rétroviseur;
- un bossage 12, prévu sur la face tournée vers l'extérieur de la porte et destiné à supporter le mécanisme de lève-vitre;
- une ouverture 13 permettant le passage du mécanisme de commande de la serrure;
- deux pattes 14 destinées à coopérer avec deux pattes 15 prévues du côté de la grande base de la pièce métallique 1 et destinées à recevoir les éléments d'articulation de la porte.

Il peut être également prévu d'intégrer d'autres fonctions non représentées telles que le logement de haut-parleurs, les points de fixation de glissières de vitre ou de l'encadrement de vitres.

L'ensemble de la pièce plastique 2 surmoulée ainsi sur la pièce métallique 1 constitue l'élément de structure interne 16 (figure 2) du panneau intérieur de la porte.

Sur la figure 2, on voit, présentée face à l'élément de structure interne 16, une garniture intérieure 17, réalisée en matériau thermoplastique. Elle présente une forme complémentaire de celle de la pièce métallique 1 de manière à ne recouvrir que celle-ci.

De cette manière on peut obtenir un effet décoratif par contraste avec la pièce plastique 2 en utilisant des matériaux présentant un aspect de surface et une pigmentation différents.

Il peut être prévu d'intégrer sur la garniture intérieure 17, venant de moulage les fonctions suivantes:
- vide-poche par la déformation 18 sur un panneau 17a et coopérant avec fond 9-10 de la pièce plastique 2;
- cache 19 muni d'une fente 20 pour le passage du mécanisme de commande de serrure et destiné à masquer l'ouverture 13 de la pièce plastique 2;
- poignée de porte 21;
- cache support rétroviseur 22;

La garniture intérieure 17 est soudée sur la pièce plastique 2. La compatibilité en soudure des deux pièces thermoplastiques 2 et 17 permet d'obtenir un ensemble homogène en structure et étanchéité.

Cette conception autorise également un effet de gamme: des revêtements décoratifs (tissus, ...) peuvent être insérés dans les médaillons 7 et 8 de manière économique car il n'est pas nécessaire alors de prévoir des finitions sur le pourtours de ces revêtements.

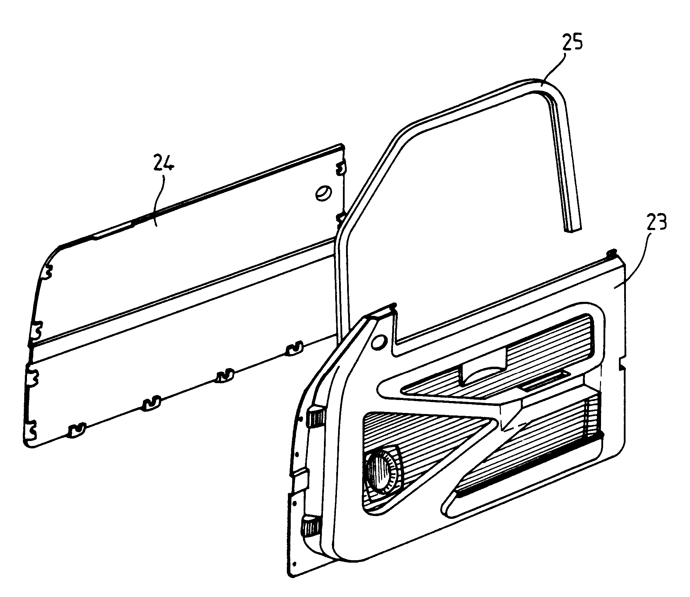

A la figure 3, on peut voir les dernières étapes de finition de la porte, à partir du panneau intérieur 23 obtenu à la figure 2 et sur lequel est fixé le panneau extérieur 24 et l'encadrement de vitre 25.

La description qui précède a été faite dans le cadre d'une porte de véhicules automobiles, mais il ne va de soi que l'invention ne se limite pas au mode de réalisation qui vient d'être décrit, mais en couvre au contraire toutes les variantes, en particulier tout autre élément ouvrant de carrosserie de véhicules automobiles, tel qu'un volet arrière.

## Revendications

1. Elément ouvrant de carrosserie de véhicule automobile comportant un panneau constitué par une pièce métallique (1) et une pièce plastique (2), présentant des nervures de rigidification (6) et surmoulée sur la pièce métallique (1) caractérisé en ce que la pièce métallique (1) et la pièce plastique en matière composite (2) constituent un élément de structure interne (16) de l'élément ouvrant, un panneau extérieur (24) étant rapporté sur cet élément de structure interne (16), en ce que la pièce métallique (1) présente une forme d'anneau définissant une ouverture (4,5) et de section en U à l'intérieur duquel sont surmoulées les nervures (6) de la pièce plastique (2), ces nervures étant retenues par des points d'ancrage prévus sur la pièce métallique (1), et en ce que la pièce plastique (2) comporte un panneau (7-8) fermant l'ouverture (4-5) de la pièce métallique (1), à travers laquelle il est rendu visible du côté intérieur de l'élément ouvrant.

2. Elément ouvrant selon la revendication 1, caractérisé en ce que la pièce métallique (1) a la forme d'un trapèze rectangle présentant une branche interne (3) reliant l'angle droit adjacent à la grande base au côté opposé (3a).

3. Elément ouvrant selon la revendication 2, caractérisé en ce que la pièce métallique (1) présente du côté de la grande base deux pattes (15) destinées à coopérer avec deux pattes (14) formées sur la pièce plastique (2) de manière à constituer les éléments d'articulation de l'élément ouvrant.

4. Elément ouvrant selon l'une quelconque des revendications précédentes, caractérisé en ce qu'une garniture intérieure (17) en matière thermoplastique destinée à recouvrit les formes de la pièce métallique (1) est soudée sur la pièce plastique (2).

5. Elément ouvrant selon l'une quelconque des revendications précédentes, caractérisé en ce que sont prévus sur la pièce plastique (2) venant de moulage des éléments tels qu'un support de rétroviseur (11), des bossages ou logement d'équipements intérieurs (12), des points de fixation d'encadrement de vitre et de glissières, une ouverture (13) pour le passage du mécanisme de commande de serrure.

6. Elément ouvrant selon la revendication 4, caractérisé en ce que la pièce plastique (2) comporte un panneau (9) disposé sous la branche oblique (3a) de la pièce métallique (1), muni d'un rebord (10) et destiné à coopérer avec une déformation (18) formée sur un panneau (17a) de la garniture intérieure (17) de manière à former un vide-poche.

7. Elément ouvrant selon la revendication 4 ou 6, caractérisé en ce que sont prévus sur la garniture intérieure (17) venant de moulage une poignée intérieure (21), un cache (19) muni d'une fente (20) pour obturer l'ouverture (13) de la pièce plastique (2).

## Patentansprüche

1. Öffnungselement einer Fahrzeugkarosserie mit einer Platte gebildet aus einem metallischen Teil (1) und einem Künststoffteil 12), das Versteifunpsrippen (6) aufweist und auf das metallische Teil (1) aufgeformt ist, dadurch gekennzeichnet, daß das metallische Teil (1) und das Kunststoffteil aus Verbundmaterial (2) ein Element von innerer Struktur (16) des Öffnungselements bilden, wobei eine äußere Platte (24) auf diesem inneren Strukturelement (16) angebracht ist, daß das metallische Teil (1) eine Ringform aufweist, die eine Öffnung (4,5) begrenzt und von U-Querschnittsform ist in dessen Inneren die Rippen (6) des Kunststoffteils (2) angeformt sind, wobei diese Rippen durch Ankerungspunkte zurückgehalten werden, die auf dem metallischen Teil (1) vorgesehen sind, und daß das Kunststoffteil (2) eine Platte (7-8) aufweist, die die Öffnung (4-5) des metallischen Teils (1) schließt, durch das es von der Innenseite des Öffnungselements sichtbar ist.

2. Öffnungselement nach Anspruch 1, dadurch gekennzeichnet, daß das metallische Teil (1) die Form eines rechtwinkligen Trapezes aufweist, das einen inneren Arm (3) aufweist, der den rechten Winkel in der Nähe der großen Basis mit der gegenüberliegenden Seite (3a) verbindet.

3. Öffnungselement nach Anspruch 2, dadurch gekennzeichnet, daß das metallische Teil (1) auf der Seite der großen Basis zwei Arme (15) aufweist, die geeignet sind, mit zwei Armen (14) ausgebildet an dem Kunststoffteil (2) zusammenzuwirken, derart, daß sie die Gelenkelemente des Öffnungselements bilden.

4. Öffungselement nach einem der vorhergehenden Ansprüche, dadurch gekennzeichnet, daß eine Innengarnitur (17) aus thermoplastischem Material auf das Kunststoffteil (2) aufgeschweißt ist, die dazu bestimmt ist, die Formen des metallischen Teils (1) zu bedecken.

5. Öffnungselement nach einem der vorhergehenden Ansprüche, dadurch gekennzeichnet, daß auf dem von dem Formen kommenden Kunststoffteil (2) Elemente, wie beispielsweise ein Rückspiegelträger (11), Vertiefungen oder Aufnahmen von inneren Ausrüstungen (12), Befestigungspunkte von Fensterrahmen und Gleitschienen, eine Öffnung (13) für den Hindurchtritt des Schloßbetätigungsmechanismus, vorgesehen sind.

6. Öffnungselement nach Anspruch 4, dadurch gekennzeichnet, daß das Kunststoffteil (2) eine Platte (9) aufweist, die unter dem schrägen Arm (3a) des metallischen Teils (1) angeordnet ist, versehen mit einem Rand (10) und dazu bestimmt, mit einer Ausbeulung (18) zusammenzuwirken, die auf einer Platte (17a) der Innengarnitur (17) ausgebildet ist, derart, daß sie eine Leertasche bildet.

7. Öffnungselement nach Anspruch 4 oder 6, dadurch gekennzeichnet, daß an der von der Form kommenden Innengarnitur (17) ein innerer Handgriff (21) und ein Verdecker (19), der mit einem Spalt (20) versehen ist, um die Öffnung (13) des Kunststoffteils (2) zu überdecken, vorgesehen sind.

## Claims

1. An opening element of the body of a motor vehicle comprising a panel constituted by a metal part (1) and a plastic part (2), having stiffening ribs (6) and duplicate-moulded over the metal part (1), characterised in that the metal part (1) and the plastic part made of composite material (2) constitute an inner structural element (16) of the opening element, an outer panel (24) being mounted on this inner structural element (16), in that the metal part (1) has an annular form defining an opening (4, 5) and of U-shaped section inside which the ribs (6) of the plastic part (2) are duplicate-moulded, these ribs being held by anchoring points provided on the metal part (1), and in that the plastic part (2) comprises a panel (7-8) closing off the opening (4-5) of the metal part (1), through which it is made visible on the inner side of the opening element.

2. An opening element according to Claim 1, characterised in that the metal part (1) has the form of a rectangular trapezium having an inner branch (3) connecting the right angle adjacent to the large base to the opposite side (3a).

3. An opening element according to Claim 2, characterised in that, on the side of the large base, the metal part (1) has two lugs (15) intended to cooperate with two lugs (14) formed on the plastic part (2) so as to constitute the hinging elements of the opening element.

4. An opening element according to any one of the preceding claims, characterised in that an inner lining (17) made of thermoplastic material intended to cover the forms of the metal part (1) is welded to the plastic part (2).

5. An opening element according to any one of the preceding claims, characterised in that, on the plastic part (2) having just been moulded, elements are provided such as a rear-view mirror support (11), bosses or housing for internal equipment (12), fixing points for a window frame and sliding channels, and an opening (13) for fitting the lock control mechanism.

6. An opening element according to Claim 4, characterised in that the plastic part (2) comprises a panel (9) arranged under the oblique branch (3a) of the metal part (1), provided with a shoulder (10) and intended to cooperate with a deformation (18) formed on a panel (17a) of the inner lining (17) so as to form a glove compartment.

7. An opening element according to Claim 4 or 6, characterised in that, on the inner lining (17) having just been moulded, an inner handle (21), and a mask (19) provided with a slot (20) for blocking off the opening (13) of the plastic part (2) are provided.

FIG. 1V

FIG. 2

FIG. 3